# EUROPEAN PATENT APPLICATION

(11) **EP 1 336 443 A1**
(43) Date of publication of application: **20.08.2003**
(21) Application number: 01976708.6
(22) Date of filing: 17.10.2001
(51) Int. Cl.: B21K 1/14, B21J 5/02, B21J 5/08, F16C 11/06

(54) **METHOD FOR MANUFACTURING ARM OF JOINT AND JOINT**

(30) Priority: 22.11.2000 JP 2000356241
(71) Applicant: KABUSHIKI KAISHA SOMIC ISHIKAWA, Sumida-ku, Tokyo 130-0004 (JP)
(72) Inventor: SUZUKI, Yoshihiro, KK Somic Ishikawa Hamatsu Kojo, Hamamatsu-shi, Shizuoka 435-8560 (JP); FUJITA, Kouichi, KK Somic Ishikawa Hamatsu Kojo, Hamamatsu-shi, Shizuoka 435-8560 (JP); KAIHOTSU, Toshihiko, c/o AISHINKEIKINZOKU K.K., Shinminato-shi, Toyama 934-031 (JP)
(74) Representative: Kemp, Paul Geoffrey
(86) International application number: JP0109102
(87) International publication number: WO02042021

(57) **Abstract**

A first-stage intermediate formed body (60) is forged by applying pressure in one direction to a working material (41) made of an aluminum alloy. The first-stage intermediate formed body (60) has a tubular arm portion (21), a generally spherical first head portion (62) provided at one end of the arm portion (21), and a ledge portion (63) at the other end of the arm portion (21). A second-stage intermediate formed body (67) is formed by deforming the ledge portion (63) by upsetting. The arm portion (21) of the second-stage intermediate formed body (67) has a second head portion (66) and an axial hole (21a). The second head portion (66) has a rounded shape and is located at the aforementioned other end of the arm portion (21). The axial hole (21a) is formed in the arm portion (21). Pressure is then applied to the first head portion (62) and the second head portion (66) in such a direction as to intersect the axis of the arm portion (21), thereby forming a cylindrical body portion (23) and an outer tube portion (22). Thus, a suspension arm (2) is formed. The invention enables the improvement of the manufacturability and facilitates strengthening of the suspension arm through reduction of the number of parts.

## Description

### TECHNICAL FIELD

The present invention relates to a method of producing a joint device arm which may be used as a suspension arm in the suspension system of an automobile and has a columnar connecting portion and two tubular portions respectively provided at the two axial ends of the connecting portion. The invention also relates to joint device provided with a joint device arm produced by said method.

### BACKGROUND OF THE INVENTION

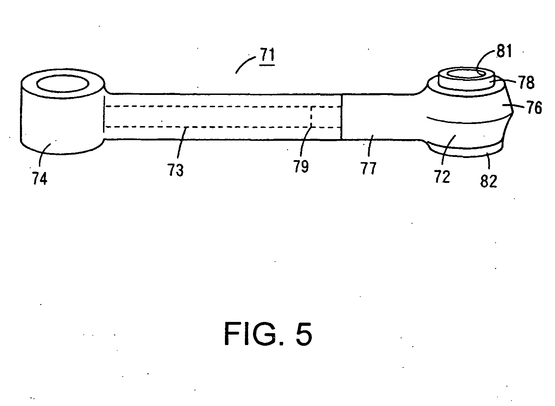

Various suspension arms are known conventionally, including a suspension arm 71 shown in Fig. 5. The suspension arm 71 has a cylindrical shaft member, a ball joint provided at one end of the shaft member, and a shaft-supporting portion provided at the other end of the shaft member.

To be more specific, the suspension arm 71 shown in Fig. 5 serves as a joint device and has a socket 72, a tube 73, and a bush-receiving cylindrical portion 74, all of which are welded to one another. The socket 72 is produced by a process that includes steps of forming a body portion 76 and a columnar arm portion 77 by forging, and subsequently forming other parts, such as an inner chamber (not shown), a cover attaching portion 78, and a welding shaft portion 79, by cutting work. The arm portion 77 extends in an approximately radial direction from the cylindrical outer surface of the body portion 76. Said inner chamber is formed inside the socket 72. The cover attaching portion 78 protrudes outward from the socket 72. The tube 73 is formed by cutting a working material to a given length and preparing both ends of the cut working material by cutting or grinding for subsequent welding. The bush-receiving cylindrical portion 74 is formed by cutting a cylindrical working material to a given length and preparing both ends of the cut working material by cutting or grinding so that a rubber bush (not shown) can be pushed therein later. Thereafter, the bush-receiving cylindrical portion 74 is welded to one end of the tube 73, and the welding shaft portion 79 of the socket 72 is welded to the other end of the tube 73. Thus, the suspension arm 71 is formed.

The body portion 76 of the socket 72 is adapted to contain a generally spherical ball head portion provided at an end of a generally rod-shaped ball stud (not shown), with a bearing seat made of synthetic resin disposed between the ball head portion and the inner surface of the body portion 76. The body portion 76, the ball stud, and the bearing seat thus combined together constitute a ball joint portion. The body portion 76 has a cylindrical shape having two apertures, i.e. an insertion hole (not shown) and an opening 81 through which a stud portion is adapted to be inserted. The insertion hole permits the ball head portion of the ball stud to be inserted therethrough into the body portion 76. The opening 81 permits a stud portion, which integrally extends from the ball head portion of the ball stud, to pass and project therefrom. A blocking plate (not shown) to dose off the insertion hole of the body portion 76 is provided so that the inside of the socket 72 serves as the aforementioned inner chamber for containing the ball head portion. The aforementioned cover attaching portion 78, which has a cylindrical shape and permits a dust cover to be immovably fitted thereto, is formed by cutting the rim of the opening 81 of the body portion 76. A stopper portion 82 is formed along the rim of the insertion hole of the body portion 76. After the ball head portion, together with the bearing seat, is placed in the inner chamber of the body portion 76, the stopper portion 82 is crimped inward, and the blocking plate is then attached to the body portion 76.

The welding shaft portion 79 is formed in a solid cylindrical shape that has a diameter smaller than the arm portion 77 and extends from the end of the arm portion 77 coaxially therewith.

A rubber bush (not shown) is pushed into the bush-receiving cylindrical portion 74 so that a cylindrical shaft member can be snugly supported in the bush-receiving cylindrical portion 74. Thus, the joint device is assembled.

The conventional structure described above and shown in Fig. 5 calls for forming various parts, such as the socket 72, the tube 73, and the bush-receiving cylindrical portion 74, by forging and cutting work, and subsequently welding these parts to one another into an integral body. Such a production process is complicated and may inhibit improvements in manufacturability. Furthermore, in cases where the device requires joining at many places, joining has to be performed solidly by welding or other appropriate means. For this reason, there is a demand for an arm that is easier to produce and has substantially improved strength.

In order to solve the above problem, an object of the present invention is to provide a joint device arm production method that enables improvements in manufacturability and facilitates reduction of the weight and increase of the strength of the arm. Another object of the present invention is to provide a joint device that includes such a joint device arm.

### DISCLOSURE OF THE INVENTION

The present invention provides a method of producing a joint device arm comprising a columnar-shaped connecting portion and tubular portions that are respectively provided at the two axial ends of the connecting portion and have apertures open in such a direction as to intersect the axis of the connecting portion. Said method of producing a joint device arm includes a first stage of the process, a second stage of the process, and a third stage of the process. The first stage of the process calls for applying pressure in one direction to a columnar-shaped working material so as to forge a first-stage intermediate formed body comprised of a tubular arm portion extending in the direction in which the pressure is applied and a generally spherical first head portion located at an end of the arm portion as an integral, contiguous body therewith. The second stage of the process calls for deforming the vicinity of the other end of the arm portion of the first-stage intermediate formed body by upsetting so as to forge a second-stage intermediate formed body provided with a second head portion. The third stage of the process calls for forging two tubular portions by opening the first head portion and the second head portion in such a direction as to intersect the axis of the arm portion.

According to the method described above, a joint device arm is formed by following the steps of applying pressure in one direction to a working material having a columnar shape to forge a first-stage intermediate formed body comprised of a tubular arm portion extending in the direction in which the pressure is applied and a generally spherical first head portion located at an end of the arm portion as an integral, contiguous body therewith, deforming the vicinity of the other end of the arm portion of the first-stage intermediate formed body by upsetting so as to form a second-stage intermediate formed body provided with a second head portion, and forging tubular portions by opening the first head portion and the second head portion in such a direction as to intersect the axis of the arm portion. As the joint device arm can be thus formed by forging and upsetting, its productivity is improved, compared with a configuration that call for welding or other joining process at a plurality of locations. Furthermore, by the configuration where a tubular portion is formed at each axial end of the hollow connecting portion, the invention facilitates reduction of the weight and increase of the strength of the arm.

According to another feature of the invention, a ledge portion having a diameter greater than that of the arm portion is formed at the aforementioned other end of the arm portion of the first-stage intermediate formed body, and the second head portion of the second-stage intermediate formed body is formed by upsetting said ledge portion. Thus forming the second head portion of the second-stage intermediate formed body by upsetting the ledge portion that has been forged at the other end of the arm portion of the first-stage intermediate formed body facilitates formation of the second-stage intermediate formed body having the second head portion and thereby improves the manufacturability of the joint device arm.

A joint device according to the invention includes a joint device arm produced by the joint device arm production method described above, a stud, and a bearing seat, wherein an inner chamber communicating with the outside through an opening is formed in at least one of the tubular portions of said joint device arm; said stud has a large diameter portion, which has a nearly spherical outer shape and is adapted to be contained in said inner chamber, and a stud portion formed integral with said large diameter portion and adapted to pass said opening; and said bearing seat has a bearing seat hole and is adapted to be contained in said inner chamber and support the large diameter portion of the stud in such a way as to permit the large diameter portion to slide therein, with said stud portion projecting from said bearing seat hole.

With the configuration described above, the invention provides a joint device which has improved manufacturability and easy to be made lighter in weight and stronger.

### BRIEF DESCRIPTION OF THE DRAWINGS

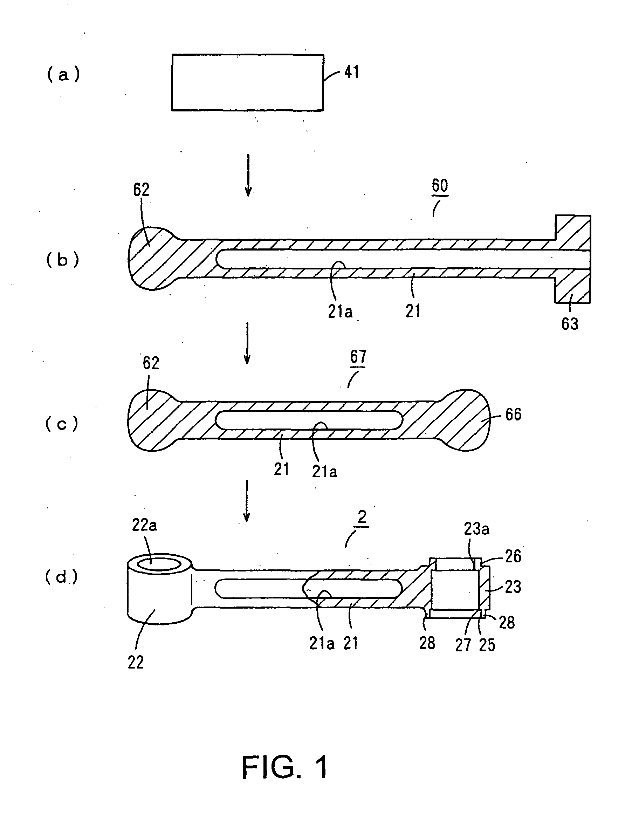

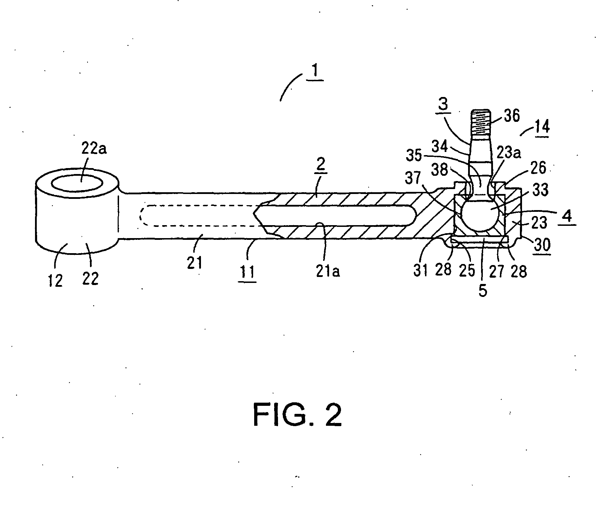

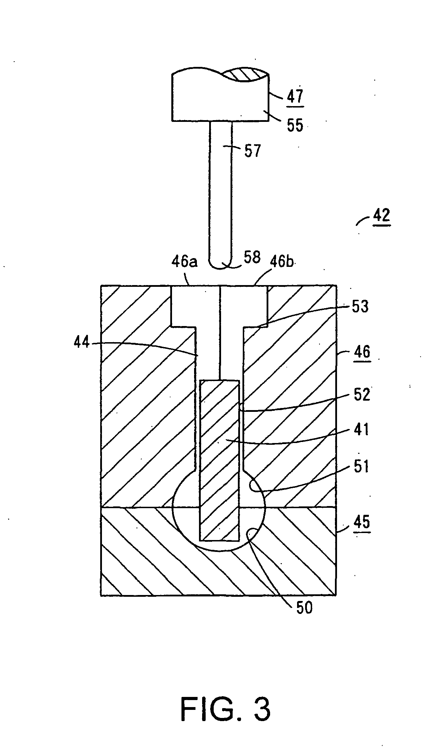

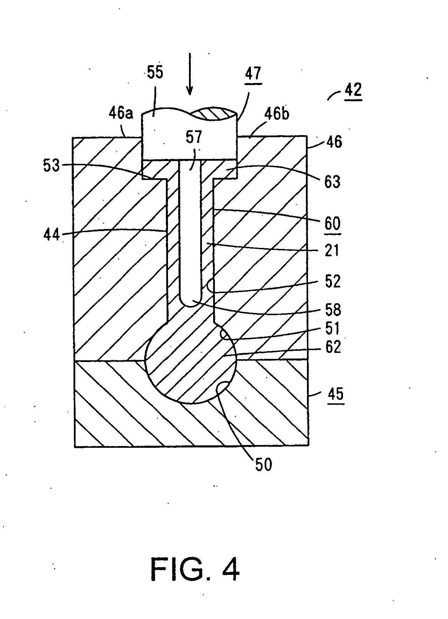

Fig. 1 is a schematic illustration of a process of producing an arm of a joint device according to an embodiment of the present invention; Fig. 2 is a partially cutaway perspective of said joint device; Fig. 3 is a sectional view of a forging machine in which the working material for producing said arm is set; Fig. 4 is a sectional view of said forging machine in the state where a first-stage intermediate formed body of said arm is formed by the forging machine; Fig. 5 is a perspective of a conventional joint device.

### PREFERRED EMBODIMENT OF THE INVENTION

Next, a production method of a joint device arm and the joint device according to an embodiment of the present invention are explained hereunder, referring to the relevant drawings.

Referring to Fig. 2, numeral 1 denotes a suspension device as a joint device. The suspension device 1 may be used in, for example, the steering system or the suspension system of an automobile. The suspension device 1 includes a suspension arm 2 as a joint device arm, a ball stud 3 as a stud to be attached to the suspension arm 2, a bearing seat 4, a blocking plate 5, a dust cover (not shown), etc. With these components, the suspension device 1 comprises a generally cylindrical connecting portion 11, a shaft-supporting portion 12, and a ball joint portion 14. The shaft-supporting portion 12 is provided at an end of the connecting portion 11 as an integral body therewith, while the ball joint portion 14 is integrally provided at the other end of the connecting portion 11.

The suspension arm 2 is formed of a metal, such as an aluminum alloy, and includes an arm portion 21, an outer tube portion 22 as a bush-receiving cylindrical portion, and a body portion 23 as a socket portion. The outer tube portion 22 serves as a tubular portion referred to in the claims and is formed at an end of the arm portion 21 as an integral, contiguous body therewith. The body portion 23 serves as another tubular portion referred to in the claims and is formed at the other end of the arm portion 21 as an integral, contiguous body therewith. The arm portion 21 constitutes the aforementioned connecting portion 11 and has a cylindrical shape, with a hollow space between the two solid, lengthwise ends. The hollow space bored in the arm portion 21 serves as an axial hole 21a. The axial hole 21a extends along the center axis of the arm portion 21.

The outer tube portion 22 is formed in a generally cylindrical shape having an axis that extends in a direction approximately perpendicular to the axis of the arm portion 21. A circular opening 22a is formed at at least one of the axial ends of the outer tube portion 22. A generally cylindrical rubber bush (not shown) is securely fitted in the outer tube portion 22. A stud serving as a shaft member (not shown) is bonded to the rubber bush by vulcanization. The outer tube portion 22, together with the rubber bush and a shaft member thus attached thereto, functions as the shaft-supporting portion 12.

The body portion 23, too, is formed in a generally cylindrical shape having an axis that extends in a direction approximately perpendicular to the axis of the arm portion 21. The aforementioned connecting portion 11 having a cylindrical shape, with its axis being approximately perpendicular to the axis of the body portion 23, integrally extends from the cylindrical outer surface of the body portion 23. The body portion 23 has a circular opening 23a at one axial end and a circular insertion hole 25 at the other axial end. The body portion 23 includes a cover attaching portion 26 formed along the rim of the opening 23a as an integral body with the body portion 23. The cover attaching portion 26 has a cylindrical shape that is coaxial with the opening 23a and has a diameter smaller than the other part of the body portion 23. The diameter of the opening 23a is smaller than the inner diameter of the body portion 23. A contact portion 27 that is contiguous with the inner surface of the body portion 23 and has a diameter greater than the inner diameter of the body portion 23 is formed near the insertion hole 25 so that that part of the body portion 23 is indented like a step. A thin stopper portion 28 is formed along the rim of the insertion hole 23 of the body portion 23 as an integral body with the body portion 23. The inner diameter of the contact portion 27 is nearly the same as the outer diameter of the blocking plate 5, which has a disk-like shape.

The insertion hole 25 is closed off by fitting the blocking plate 5 in the contact portion 27 and subsequently crimping the stopper portion 28 inward. Thus, a housing 30 having a generally cylindrical shape with a bottom is integrally assembled from the body portion 23 and the disk-shaped blocking plate 5, with the blocking plate 5 serving as the bottom face portion of the housing 30. The interior of the housing 30 assembled as above serves as an inner chamber 31.

The ball stud 3 is made of a metal and comprised of a spherical ball head portion 33, a narrow portion 35, and a stud portion 34, all of which are formed as an integral body, with the narrow portion 35 located between the ball head portion 33 and the stud portion 34. The ball head portion 33 serves as a large diameter portion. The stud portion 34 is formed in the shape of a solid cylinder. An external thread portion 36 is formed at the end of the stud portion 34.

The bearing seat 4 is formed as an integral body made of synthetic resin, such as polyacetal resin or polyurethane resin, that has good bearing characteristics and a great ability to withstand load, as well as sufficient rigidity and elasticity. The bearing seat 4 has a thickset cylindrical shape with a bottom and can be contained in the inner chamber 31 of the housing 30. To be more specific, the bearing seat 4 has a cylindrical outer shape, whereas the interior of the bearing seat 4 is formed into a space portion 37 having a generally spherical curved surface. A bearing seat hole 38 is formed at one end of the bearing seat 4 so that the space portion 37 communicates with the outside through the bearing seat hole 38. The ball head portion 33 of the ball stud is adapted to be contained in the space portion 37 in the state that the stud portion 34 projects from the bearing seat hole 38.

The dust cover (not shown) is formed of rubber or a soft synthetic resin into a generally cylindrical shape provided with a first fitting portion and a second fitting portion, each of which has a ring-like shape. The first fitting portion is provided at one end of the dust cover and adapted to fit to the cover attaching portion 26 of the housing 30. The second fitting portion is provided at the opposite end of the dust cover and adapted to fit to the stud portion 34 of the ball stud 3. The dust cover is attached by fitting the first fitting portion of the dust cover to the cover attaching portion 26 of the housing 30 and fitting the second fitting portion of the dust cover to the stud portion 34 of the ball stud 3. By thus fitting the ball stud 3, the bearing seat 4, and the dust cover to the housing 30, which is comprised of the body portion 23 and the blocking plate 5, the ball joint portion 14 is assembled.

The connecting portion 11 of the suspension device 1 has such a length that there is a given distance between the center of the ball head portion 33 of the ball joint portion 14 and the center axis of the shaft member of the shaft-supporting portion 32.

Next, the process of producing the suspension arm 2 described above is explained hereunder, referring to the relevant drawings.

First, as shown in Fig. 1 (a), a working material 41 having a cylindrical shape is provided. The working material 41 is made of a metal, such as an aluminum alloy. The working material 41 is a so-called solid material, which has no hollow part therein. In the case of the present embodiment, the working material 41 is an aluminum material in the form of a solid cylinder.

As shown in Figs. 3 and 4, the apparatus for producing the suspension arm 2 includes a forging machine 42, which has a lower dies 45, an upper die 46, and a punch 47. The upper die 46 and the lower die 45 are adapted to be combined together so as to form a cavity 44. The punch 47 is adapted to insert in the cavity 44.

A lower head forming concave 50, which is a generally hemi-spherical concave open at the top and forms a part of the aforementioned cavity 44, is formed in the upper part of the lower die 45. The upper die 46 has an upper head forming concave 51, a connecting form portion 52, and a ledge forming portion 53, all of which are formed as an integral, contiguous body. The upper head forming concave 51, too, contributes to formation of the cavity 44. The upper head forming concave 51 is formed in the underside of the upper die 46 into the shape of a generally hemi-spherical concave that is open downward and opposes the lower head forming concave 50 of the lower die 45. When combined with each other, the upper head forming concave 51 and the lower head forming concave 50 together form a generally spherical surface. The connecting form portion 52 has a cylindrical shape that extends vertically from the top of the upper head forming concave 51. The inner diameter of the connecting form portion 52 is nearly the same as the outer diameter of the arm portion 21 of the suspension arm 2. The ledge forming portion 53 is formed in the shape of a cylindrical recess that is formed in the upper end of the upper die 46 and open upward. The ledge forming portion 53 extends from the upper end of the connecting form portion 52 as a contiguous, coaxial body therewith and has a diameter greater than that of the connecting form portion 52. The upper die 46 is divided laterally by a plane extending along the axis of the connecting form portion 52. In other words, the upper die 46 is comprised of a pair of dies 46a,46b that are approximately symmetrical with respect to said plane and can be laterally spaced apart.

The punch 47 has a punching portion 55 and a pin portion 57. The punching portion 55 is adapted to be fitted in the connecting form portion 52. The pin portion 57 projects from the underside of the punching portion 55 coaxially with the punching portion 55 and is adapted to be inserted into the connecting form portion 52. The pin portion 57 has a cylindrical shape with a hemi-spherical guide surface 58 at the end. The outer diameter of the pin portion 57 is smaller than the inner diameter of the connecting form portion 52 of the upper die 46 so that the pin portion 57 can be inserted in the connecting form portion 52 until the cylindrical surface of the pin portion 57 faces the inner surface of the connecting form portion 52 of the upper die 46 with a given clearance therebetween. The punch 47 has such a length that when the punch 47 is inserted into the cavity 44 to the position where the underside of the punching portion 55 faces the bottom face of the ledge forming portion 53 at a given distance therefrom, the distal end of the pin portion 57 does not reach the upper head forming concave 51 of the upper die 46.

A first-stage intermediate formed body 60 shown in Fig. 1 (b) is forged from the working material 41 by using the forging machine 42 described above.

As shown in Fig. 3, formation of the first-stage intermediate formed body 60 calls for bringing the upper die 46 and the lower die 45 together, and inserting the working material 41 into the connecting form portion 52 of the forging machine 42 in the state that the cavity 44 is formed in the forging machine 42. The working material 41 has a diameter nearly the same as or slightly smaller than that of the connecting form portion 52 of the upper die 46.

Thereafter, the punch 47 is lowered so as to insert the pin portion 57 into the connecting form portion 52 of the upper die 46 and apply pressure in one direction, i.e. in such a direction as to flatten the working material 41. As shown in Fig. 4, the pressure causes the working material 41 to flow into the gap between the cylindrical outer surface of the pin portion 57 and the connecting form portion 52 of the upper die 46 in the manner of backward extrusion so that the arm portion 21 having the axial hole 21a is formed. At the same time, the lower end portion of the working material 41 is shaped in the space defined by the upper head forming concave 51 of the upper die 46 and the lower head forming concave 50 of the lower die 45 so that a ball-shaped first head portion 62 is formed.

When the punch 47 is lowered until reaching the position where the underside of the punching portion 55 faces the bottom face of the ledge forming portion 53 at the aforementioned given distance therefrom, the working material 41 flows into the space between the underside of the punching portion 55 and the bottom face of the ledge forming portion 53 so that the ledge portion 63 is formed at the end of the arm portion 21 as shown in Fig. 1 (b) and Fig. 4. The ledge portion 63 formed as above has a diameter greater than the arm portion 21 and extends like a flange from the end of the arm portion 21.

Thus, the aforementioned first-stage intermediate formed body 60 having the generally spherical first head portion 62 and the cylindrical arm portion 21, which extends from the first head portion 62 as an integral, contiguous body therewith and has an axis extending in the direction in which the pressure is applied to the punch 47, is forged.

Thereafter, by lifting the punch 47 to pull the pin portion 57 of the punch 47 out of the axial hole 21 of the arm portion 21, and laterally spacing apart the upper die 46 to remove the first-stage intermediate formed body 60 from the dies, the first stage of the process is completed.

The second stage of the process calls for deforming the ledge portion 63, which is located at the aforementioned other end of the arm portion 21 of the first-stage intermediate formed body 60, by means of upsetting so as to shape the ledge portion 63 into a second head portion 66 having a generally spherical shape. This may be done by rolling with a roller, cold forging or any other appropriate processing. The second head portion 66 is formed so that the center of the second head portion 66 is at a given distance from the center of the first head portion 62. Thus, a second-stage intermediate formed body 67 comprised of the arm portion 21, the first head portion 62 at one end of the arm portion 21, and the second head portion 66 at the other end of the arm portion 21 is formed as shown in Fig. 1 (c).

The third stage of the process calls for setting the second head portion 66 in a pressing machine (not shown) and applying pressure to the first head portion 62 and the second head portion 66 in a direction approximately perpendicular to the axis of the arm portion 21 so as to form the aforementioned outer tube portion 22 at one end of the arm portion 21 and the body portion 23 at the other end of the arm portion 21 as shown in Fig. 1 (d). At that time, the outer tube portion 22 and the body portion 23 are formed so as to provide a given distance between the center axis of the outer tube portion 22 and the center axis of the body portion 23.

Thereafter, the ball head portion 33 of the ball stud 3 is placed in the bearing seat 4, and the ball stud 3 with the bearing seat 4 fitted thereto is inserted through the insertion hole 25 into the body portion 23 with the external thread portion 36 of the stud portion 34 head-first, and the stud portion 34 is passed through the opening 23a of the body portion 23. Thus, the ball head portion 33 of the ball stud 3 is positioned in the body portion 23 together with the bearing seat 4.

Then, the blocking plate 5 is pushed from the insertion hole 25 into the body portion 23 so that the blocking plate 5 comes into contact with the contact portion 27 and the bearing seat 4. In this state, the stopper portion 28 is crimped inward by using a processing machine (not shown) so that the blocking plate 5 is immovably secured. Thus, the housing 30 is formed in the state where the ball stud 3 is supported in the inner chamber 31 of the housing 30.

With the first fitting portion and the second fitting portion of the dust cover (not shown) respectively fitted to the cover attaching portion 26 of the housing 30 and the stud portion 34 of the ball stud 3, the dust cover is attached to the housing 30 and the ball stud 3. Thus, assembly of the ball joint portion 14 is completed.

Thereafter, with the shaft-supporting portion 12 being formed by bonding the aforementioned shaft member to the rubber bush (not shown) in the outer tube portion 22 by vulcanization, assembly of the suspension device 1 is completed.

A suspension arm is conventionally formed by, for example, cutting a plurality of members and welding or otherwise joining the cut members. According to the embodiment described above, however, a suspension arm is formed by following the procedure that comprises applying pressure in one direction to a columnar working material 41 so as to forge a first-stage intermediate formed body 60 comprised of a generally spherical first head portion 62 and a tubular arm portion 21 that projects integrally from the first head portion 62 and has an axis extending in the direction in which the pressure is applied, upsetting the distal end of the arm portion 21 of the first-stage intermediate formed body 60 so as to form a second-stage intermediate formed body 67 provided with a second head portion 66, and applying pressure to the first head portion 62 and the second head portion 66 in a direction approximately perpendicular to the axis of the arm portion 21 so as to form an outer tube portion 22 and a body portion 23 respectively at the two axial ends of the arm portion 21. The embodiment described above thus eliminates the necessity of complicated welding work and simplifies the production process of a suspension arm 2, which is lightweight and has a hollow arm portion 21, thereby making the suspension arm 2 more convenient to produce and reducing its production cost.

The suspension arm 2 can easily be formed by forging alone. As there are no bonding portions, the strength of the suspension arm 2 is increased.

As one stage of the process is sufficient to forge up to the first-stage intermediate formed body 60, the manufacturability is improved. In the course of forging the first-stage intermediate formed body 60 including the first head portion 62, the ledge portion 63 having a diameter greater than that of the arm portion 21 is formed at an end of the arm portion 21, which is provided with the first head portion 62. In the subsequent stage, the ledge portion 63 is shaped into a second head portion 66 of the second-stage intermediate formed body 67 by upsetting. With the feature as above, the embodiment enables the easy formation of the second-stage intermediate formed body 67 comprised of the arm portion 21, the first head portion 62 at one end of the arm portion 21, and the second head portion 66 at the other end of the arm portion 21, and thereby improves the manufacturability of the arm.

Another feature of the embodiment lies in that the suspension arm 2 is forged by using the working material 41 made of an aluminum alloy. This feature enables the easy formation of the suspension arm 2 that is ensured of stable characteristics for a long period of time without fluctuation of the characteristics, even if the suspension arm 2 is used in a vehicle or as any other component that will have to bear a heavy load. It is in this respect that the embodiment improves the manufacturability of the housing.

A suspension device 1 provided with a suspension arm 2 having the features described above can be comprised of a reduced number of parts and, therefore, reduce production costs.

Although the explanation given as above refers to the embodiment wherein the connecting portion 11 of the suspension device 1 is provided with the shaft-supporting portion 12 and the ball joint portion 14 at the two opposing ends of the connecting portion 11 respectively, the invention is not limited to such a configuration; the connecting portion of a suspension device according to the invention may be provided with a ball joint portion at each end, or, in an alternative structure, a tubular portion may be provided at each end of the connecting portion. In other words, in addition to the configuration where the arm portion 21 of the suspension arm is provided with an outer tube portion 22 as a bush-receiving cylindrical portion and a body portion 23 as a socket portion respectively at the two ends of the arm portion 21, other configurations, such as one that calls for providing an outer tube portion at each end of the arm portion 21 or another that calls for providing a body portion at each end of the arm portion 21, are also permissible.

Although the invention explained as above refers to the embodiment wherein the suspension arm 2 is formed of an aluminum alloy by forging, the metal used as the material is not limited to an aluminum alloy; the suspension arm 2 may be formed of any metal, provided that the metal is capable of flowing upon application of pressure and being consequently formed into the first-stage intermediate formed body 60 or the second-stage intermediate formed body 67 and that the suspension arm 2 of the suspension device 1 is ensured of given characteristics, including desired strength, resistance to corrosion, and the ability to permit processing, such as crimping of the stopper portion 28. Aluminum alloys, however, are particularly desirable, because they are light in weight and highly malleable.

The arm portion 21 of the suspension arm 2 is not required to have a cylindrical shape; any tubular shape, including those having oval or polygonal cross sections, is also permissible. The outer tube portion 22 or the body portion 23 of the suspension arm 2, too, may have any tubular shape.

Although the explanation has been given referring to the embodiment wherein the housing 30 of the ball joint portion 14 includes a blocking plate 5 attached to the body portion 23, the invention is not limited to such a configuration, and the housing 30 may be formed as, for example, an integral body wherein the blocking plate 5 is formed integral with the body portion 23. If such is the case, the ball joint portion 14 may be assembled by inserting the ball head portion 33 of the ball stud 3 into the housing 30 from the opening 23a of the housing 30 and subsequently crimping the vicinity of the opening 23a inward.

Furthermore, in the embodiment described above, the ball joint portion 14 may have such a configuration that the ball head portion 33, which is provided at an end of the stud portion 34 of the ball stud 3, is contained in the housing 30 provided with an inner chamber 31 having a cylindrical shape with a bottom so that the ball stud 3 can be rotatably supported by the housing 30. However, the invention is not limited to such a configuration; for example, the joint device may include a stud bolt having a large-diameter portion that is located at the middle of the stud portion 34 and has a generally spherical outer shape and a diameter greater than the stud portion 34, said stud bolt fitted in the housing with the large-diameter portion of the stud contained in the body portion 23 and both ends of the stud portion 34 projecting from the body portion 23 in opposite directions.

Furthermore, the buckling strength to withstand load applied to the ball joint portion 14 can be increased by such a configuration that the center of the ball head portion 33 contained in the housing 30 is located on a line extended from the center axis of the connecting portion 11, i.e. the arm portion 21 of the suspension arm 2.

It is not essential to form the bearing seat 4 of the ball joint portion 14 in a thickset cylindrical shape having a bottom; the bearing seat 4 may have any appropriate shape, provided that the ball head portion 33 can be slidably enveloped therein.

Although the ball joint portion 14 in the embodiment explained as above is provided with a dust cover, the embodiment is also applicable to cases where no dust cover is provided. Furthermore, there are various ways to attach the dust cover to the housing; for example, the body portion 23 may be provided with a dust cover groove extending in the circumferential direction so that the dust cover can be affixed to the dust cover groove with a clip or the like.

The cover attaching portion 26, the contact portion 27, or the stopper portion 28 may be formed by cutting or other processing instead of press molding. In order to reduce the number of processing steps, however, it is desirable to form these portions integrally when the body portion 23 is formed. Furthermore, cutting or grinding work may be performed to finish the inner surface of the opening 23a or the inner chamber 31.

As described above, the method of producing a joint device arm according to the present invention enables formation of a suspension arm 2 as a joint device arm by applying pressure in one direction to a columnar working material 41 so as to forge a first-stage intermediate formed body 60 comprised of a tubular arm portion 21 and a generally spherical first head portion 62, deforming the vicinity of the distal end, i.e. the end opposite the first head portion 62, of the arm portion 21 of the first-stage intermediate formed body 60 by upsetting so as to form a second-stage intermediate formed body 67 provided with a second head portion 66, and forging tubular portions, i.e. an outer tube portion 22 and a body portion 23, by opening the first head portion 62 and the second head portion 66 in such a direction as to intersect the axis of the arm portion 21. As the suspension arm 2 can be thus formed by forging and upsetting, its productivity is improved, compared with a configuration that call for welding or other bonding process at a plurality of locations. Furthermore, by enabling integral formation of two tubular portions, i.e. the outer tube portion 22 and the body portion 23, respectively at the two axial ends of the hollow connecting portion 11, the invention facilitates reduction of the weight and increase of the strength.

According to another feature of the invention, the method of producing a joint device arm calls for forming the second head portion 66 of the second-stage intermediate formed body 67 by upsetting the ledge portion 63, which has been forged at the aforementioned distal end of the arm portion 21 of the first-stage intermediate formed body 60 and has a diameter greater than the arm portion 21. This feature facilitates formation of the second-stage intermediate formed body 67, which includes the second head portion 66, and improves the manufacturability of the arm.

Furthermore, as a joint device according to the invention uses joint device arm produced by the production method of a joint device arm described above, the invention improves the manufacturability of the joint device and facilitates reduction of the weight and increase of the strength of the device.

### POSSIBLE INDUSTRIAL APPLICATION

As described above, a joint device and a method of producing its arm according to the invention are applicable to a suspension arm typically used in a vehicle suspension system.

## Claims

1. A method of producing a housing of a joint device arm including:
a columnar-shaped connecting portion and
tubular portions that are respectively provided at the two axial ends of the connecting portion and have apertures open in such a direction as to intersect the axis of the connecting portion, wherein said method comprises:
a first stage of the process that calls for applying pressure in one direction to a columnar-shaped working material so as to forge a first-stage intermediate formed body comprised of a tubular arm portion extending in the direction in which the pressure is applied and a generally spherical first head portion located at an end of the arm portion as an integral, contiguous body therewith,
a second stage of the process that calls for deforming the vicinity of the other end of the arm portion of the first-stage intermediate formed body by upsetting so as to forge a second-stage intermediate formed body provided with a second head portion, and
a third stage of the process that calls for forging two tubular portions by opening the first head portion and the second head portion in such a direction as to intersect the axis of the arm portion.

2. A method of producing a housing of a joint device arm as claimed in claim 1, wherein:
a ledge portion having a diameter greater than that of the arm portion is formed at the aforementioned other end of the arm portion of the first-stage intermediate formed body, and
the second head portion of the second-stage intermediate formed body is formed by upsetting said ledge portion.

3. A joint device including:
a joint device arm produced by the joint device arm production method as claimed in claim 1 or claim 2 so that an inner chamber communicating with the outside through an opening is formed in at least one of said tubular portions,
a stud having a large diameter portion, which has a nearly spherical outer shape and is adapted to be contained in said inner chamber, and a stud portion formed integral with said large diameter portion and adapted to pass said opening, and
a bearing seat that has a bearing seat hole and is adapted to be contained in said inner chamber and support the large diameter portion of the stud in such a way as to permit the large diameter portion to slide therein, with said stud portion projecting from said bearing seat hole.
